# EUROPÄISCHE PATENTANMELDUNG

(11) **EP 0 989 713 A2**
(43) Veröffentlichungstag der Anmeldung: **29.03.2000**
(21) Anmeldenummer: 99116798.2
(22) Anmeldetag: 01.09.1999
(51) Int. Cl.: H04M 1/00, H04L 29/06, G06F 9/44, H04M 1/247

(54) **Software-Update für Webphones**

(30) Priorität: 24.09.1998 DE 19843916
(71) Anmelder: SIEMENS AKTIENGESELLSCHAFT, 80333 München (DE)
(72) Erfinder: Krammer, Johann, 80637 München (DE); Bruchertseifer, Jörg, 86156 Augsburg (DE)

(57) **Zusammenfassung**

Die Erfindung betrifft ein Verfahren für das Update von Web-Endgeräten, bei dem eine zertifizierte Update-Software auf einem Server in dem Web-Netz abrufbar angeboten wird.

## Beschreibung

Die Erfindung betrifft ein Verfahren für das Update von Web-Endgeräten.

Solche Web-Endgeräte sind sogenannte Webphones oder Online-Terminals, die auch allgemein als Internetzugangsgeräte bezeichnet werden. Diese Geräte sind drahtgebunden oder auch drahtlos über ein Kommunikationsnetz mit dem Internet verbindbar. Diese Geräte können für herkömmliche verbale Kommunikation, für den Austausch von digitalen Textnachrichten, und allgemein für die Darstellung von aus dem Internet abrufbaren Informationen verwendet werden. Als Kommunikationsnetz kann ein digitales oder analoges öffentliches Telefonnetz dienen, das über einen Zugangsrechner (Gateway) eines Service Providers am Internet oder World-Wide-Web angeschaltet ist.

Solche Web-Endgeräte beziehungsweise Internetzugangsgeräte besitzen in der Regel keine externe Schnittstelle, um die Software auszutauschen oder zu erweitern, die mit dem Gerät ausgeliefert wurde. Ein solcher Softwareaustausch ist aus Aktualitätsgründen sowie zur Erweiterung der Funktionalitäten wünschenswert, so daß auch neue Features mit dem Endgerät benutzbar sind. Wenn das Web-Endgerät keine steckbare Schnittstelle zur Außenwelt aufweist, sei es seriell, über eine Steckkarte, oder über eine Smart-Card, so ist eine Änderung der Software nur im Service möglich. Eine Einsendung zum Kundendienst ist für den Benutzer zeitraubend und umständlich.

Der Erfindung liegt die Aufgabe zugrunde ein für den Benutzer komfortables Verfahren zur Software-Änderung für diese Geräte anzubieten.

Diese Aufgabe wird erfindungsgemäße durch die im Patentanspruch 1 angegebenen Merkmale gelöst.

Erfindungsgemäß wird dem Benutzer auf seinem Web-Endgerät ein Menü im Internet-Browser angeboten, welches ihn auf Serviceseiten im Internet leitet, die dort auf einem Server gespeichert sind. Dort kann der Benutzer sich über vorhandene Updates beziehungsweise Upgrades und Patches sowie über deren Kosten informieren. Unter einem Software-Update wird streng genommen der komplette Austausch der Software auf dem Endgerät verstanden, die also durch eine komplette neue Version ersetzt wird. Bei einem Upgrade wird eine neue, zusätzliche Software auf das Endgerät gespielt, so daß für den Benutzer neue Funktionalitäten beziehungsweise Features zur Verfügung stehen. Unter einem Patch wird der Austausch beziehungsweise der Ersatz von Teilen der Software verstanden. Bei der folgenden Beschreibung wird der Einfachheit halber als Oberbegriff Update verwendet, worunter der ganze sowie auch der teilweise Ersatz der vorhandenen Software, und weiter auch das Einspielen von einer zusätzlichen Software auf das Endgerät verstanden werden soll.

Im folgenden wird die Erfindung anhand eines Ausführungsbeispieles beschrieben.

Das Internetzugangsgerät beziehungsweise Web-Endgerät oder Webphone ist beispielsweise über eine digitale Kommunikationsleitung mit einem Zugangsrechner eines Internet-Service-Providers verbunden. Der Benutzer des Webphones ist Kunde bei diesem Internet-Service-Provider, und der Verbindungsaufbau zu dessen Server erfolgt über ein Internetprotokoll, beispielsweise über http.

Erfindungsgemäß wird bei einem standardmäßigen Verbindungsaufbau zum Server des Internet-Service-Providers, gegebenenfalls unterstützt durch einen Hyperlink von einer Internetseite, vom Benutzer eine Updateseite angewählt. Auf dieser Seite erwarten den Kunden die entsprechenden Informationen für den Software-Update, beispielsweise Servicehinweise, Bedienungsanleitung, Update-, Upgrade- und Patchauswahl sowie über eventuell entstehende Kosten.

Bei einer nützlichen Ausgestaltung der Erfindung wird nach einer vom Kunden erfolgten Auswahl einer Software-Update-Version im Webphone eine Konsistenzprüfung durchgeführt. Bei dieser Konsistenzprüfung werden die erforderlichen Ressourcen, beispielsweise der Speicherplatz, überprüft, und gegebenenfalls werden am Web-Endgeräte Informationen über Probleme beziehungsweise Inkonsistenzen angezeigt.

Bei einer Weiterbildung der Erfindung kann es vorgesehen sein, daß ein Download der Software-Update-Version erst nach deren Bezahlung erfolgt. Es kann hierbei vom Internet-Service-Provider vorgesehen sein, daß bei einem entsprechend hohen Betrag die Features des Endgerätes benutzt werden, so daß beispielsweise der entsprechende Betrag von einer Chipkarte abgebucht oder durch einen entsprechenden Bankauftrag überwiesen wird.

Nach der Überprüfung dieser Bedingungen wird dann der Download der ausgewählten Software-Version gestartet. Es kann hierzu beispielsweise ein weiterer Knopfdruck des Benutzers erforderlich sein. Alle Vorgänge können für Nachweiszwecke für einen bestimmten Zeitraum protokolliert und gespeichert werden.

Ein wesentlicher Bestandteil der Erfindung ist, daß dem Kunden nur eine zertifizierte Update-Software-Version angeboten wird. Die Zertifizierung kann hierbei durch den Internet-Service-Provider selbst oder durch den Hersteller beziehungsweise Anbieter der Software erfolgen. Zur Zertifizierung wird in an sich bekannter Weise beispielsweise das Public-Key-System verwendet. Hierbei wird die Software mit dem geheimen Schlüssel des Anbieters verschlüsselt. Im Endgerät des Kunden kann dann durch Entschlüsselung mit dem öffentlichen Schlüssel des Anbieters die Authentizität der Software-Version überprüft werden. Nach der Durchführung des Downloads der Software-Version wird diese Überprüfung durchgeführt, und beim positiven Ergebnis die Software gespeichert. An einer festgelegten Stelle im Speicher des Endgeräts wird die Existenz der neuen Software markiert, um sie nach dem nächsten Boot des Systems einzuklinken, d.h. den Benutzer zur Verfügung zu stellen.

Vor dem Booten des Systems des Webphones wird an einer festgelegten Stelle nachgesehen, ob eine neue Software-Version vorhanden ist. In diesem Fall sorgt eine an sich bekannte Routine für das Einklinken der entsprechenden Software-Schleife in das System.

## Patentansprüche

1. Verfahren für das Update von Web-Endgeräten
bei dem eine zertifizierte Update-Software auf einem Server in dem Web-Netz abrufbar angeboten wird.

2. Verfahren nach Anspruch 1
bei dem der Download der Update-Software erst nach Erfüllung einer Bedingung, insbesondere einer Konsistenzprüfung mit dem Endgerät, durchgeführt wird.
